# EUROPÄISCHE PATENTSCHRIFT

(11) **EP 1 543 955 B1**
(45) Veröffentlichungstag und Bekanntmachung des Hinweises auf die Patenterteilung: **10.09.2008**
(21) Anmeldenummer: 04025847.7
(22) Anmeldetag: 30.10.2004
(51) Int. Cl.: B32B 27/32, G09F 3/02, C08J 5/18

(54) **Etikettenfolien-Laminat**
Labeling laminate
Feuille pour étiquette multicouche

(30) Priorität: 18.12.2003 DE 10359366
(43) Veröffentlichungstag der Anmeldung: 22.06.2005
(73) Patentinhaber: Nordenia Deutschland Gronau GmbH, 48599 Gronau (DE)
(72) Erfinder: Hamulski, Markus, 48599 Gronau-Epe (DE); Hach, Maik, 48599 Gronau-Epe (DE)
(74) Vertreter: Albrecht, Rainer Harald

(56) Entgegenhaltungen:
- EP-A- 1 298 627
- WO-A-93/03695

## Beschreibung

Die Erfindung betrifft ein Etikettenfolien-Laminat mit einem Träger und einer von dem Träger ablösbaren, stanz- und bedruckbaren Etikettenfolie, wobei die Etikettenfolie auf einer mehrschichtigen Extrusionsfolie mit einer Foliendicke von weniger als 85 µm basiert.

Die Etikettenfolie muss für die Verarbeitung in üblichen Etikettiervorrichtungen eine ausreichende Biegesteifigkeit aufweisen, wobei aus Kostengründen eine möglichst geringe Foliendicke angestrebt wird. Ferner muss die Etikettenfolie sich durch gute Stanzeigenschaften auszeichnen und bedruckbar sein.

Eine mehrschichtige Extrusionsfolie für ein Etikettenfolien-Laminat mit den eingangs beschriebenen Merkmalen ist aus der Druckschrift EP 1 298 627 A2 bekannt. Die Extrusionsfolie-ist asymmetrisch aus zwei Schichten gebildet, wobei eine Außenschicht auf einer der Seiten der Extrusionsfolie HDPE als Beimischung mit einem Anteil von maximal 40 Gew.-% aufweist. Der Hauptbestandteil der Außenschicht ist LDPE. Die Unterschicht aus weichem LDPE bildet die Rückseite der Etikettenfolie und ist mit druckempfindlichem Klebstoff beschichtet.

Die WO 93/03695 beschreibt ein Etikettenfolien-Laminat mit einer Extrusionsfolie als Etikettenfolie, wobei zumindest eine der Lagen der Extrusionsfolie aus verschiedenen Polymeren abgemischt ist. Neben einlagigen Monofolien werden asymmetrische Coextrusionsfolien beschrieben, die eine äußere Lage aus LDPE aufweisen.

Bei einem aus US 4 946 532 bekannten Etikettenfolien-Laminat besteht die Etikettenfolie aus einer dreischichtigen, durch Coextrusion hergestellten Extrusionsfolie mit einer Kernschicht aus Polyethylen und nicht-olefinischen Skinlagen, vorzugsweise aus Ethylenvinylacetat. Die Dicke der Kernschicht wird so bemessen, dass die Etikettenfolie eine ausreichende Biegesteifigkeit zur Verarbeitung in Etikettiervorrichtungen aufweist. Das in der Kernschicht verwendete Polyethylen kann eine Dichte zwischen 0,915 g/cm³ und 0,965 g/cm³ aufweisen.

Aus US 6 040 027 ist eine mehrschichtige Etikettenfolie bekannt, deren Kernschicht aus Polypropylen oder einem Polypropylencopolymer mit darin eingelagerten Feststoffen besteht. Durch feinteilige Feststoffe, die in einer Menge von bis zu 40 Gew.% zugegeben werden, wird die Biegesteifigkeit der Etikettenfolie beeinflusst. An die Kernschicht schließen ein- oder beidseitig Skinlagen aus einem nicht-olefinischen Polymer, vorzugsweise aus Ethylenvinylacetat an. Es werden Foliendicken zwischen 38 µm und 165 µm angegeben.

Handelsübliche Polyethylenfolien, die als Etikettenfolien in einem Etikettenfolien-Laminat eingesetzt werden, weisen eine Dicke von mehr als 85 µm und zumeist eine Dicke von mehr als 100 µm auf. Vor diesem Hintergrund liegt der Erfindung die Aufgabe zugrunde, für ein Etikettenfolien-Laminat mit den eingangs beschriebenen Merkmalen eine Etikettenfolie aus Polyethylen anzugeben, die bei einer möglichst geringen Foliendicke gute Gebrauchseigenschaften aufweist und insbesondere eine hohe Biegesteifigkeit besitzt.

Zur Lösung dieser Aufgabe lehrt die Erfindung, dass die Extrusionsfolie zwischen zwei äußeren Schichten aus einem Polyethylen hoher Dichte (HDPE) mit einer Dichte von mehr als 0,950 g/cm³ eine Kernschicht aus einem Polyethylen niedriger Dichte (LDPE oder LLDPE) mit einer Dichte von weniger als 0,945 g/cm³ aufweist, und wobei die äußeren Schichten eine Schichtdicke von mindestens 15 µm aufweisen.

Nach der Biegetheorie bei Festkörpern (DUBBEL, Band 1, Auflage 1970, Seite 363) erfahren die äußeren Zonen bei einer Biegung um eine neutrale Faser des Körpers eine Verlängerung oder Verkürzung. Die Erfindung beruht auf der Überlegung, dass die Verwendung eines steifen Materials in den äußeren Zonen einen größeren Einfluss auf die Biegesteifigkeit der Folie hat als die Verwendung eines solchen Materials im Bereich der neutralen Faser. Polyethylen hoher Dichte ist ein steifer Kunststoff, welcher der Etikettenfolie eine hohe Biegesteifigkeit verleiht, wenn er im Rahmen der erfindungsgemäßen Lehre in den äußeren Zonen der Folien zur Anwendung kommt. Durch die erfindungsgemäße Lehre ist es möglich, die Foliendicke der Etikettenfolie auf Werte von ca. 70 µm zu reduzieren.

In weiterer Ausgestaltung lehrt die Erfindung, dass die Extrusionsfolie mehrschichtig ausgebildet ist und zwischen äußeren Schichten, die aus einem Polyethylen hoher Dichte (HDPE) bestehen, eine Kernschicht aus einem Polyethylen niedriger Dichte mit einer Dichte von weniger als 0,945 g/cm³ aufweist. Als Polyethylen niedriger Dichte sind LDPE-Polyethylene und LLDPE-Polyethylene einsetzbar. Die äußeren, aus einem Polyethylen hoher Dichte bestehenden Schichten (Zonen) weisen eine Schichtdicke von mindestens 15 µm, vorzugsweise eine Dicke zwischen 18 µm und 25 µm auf.

Im Rahmen der Erfindung liegt es auch, dass die Extrusionsfolie als einschichtige Monofolie aus Polyethylen hoher Dichte (HDPE) mit einer Dichte von mehr als 0,950 g/cm³ ausgebildet ist. Bei einer einschichtigen Monofolie leisten die äußeren Zonen einen größeren Beitrag zur Biegesteifigkeit als der Kernbereich im Bereich der neutralen Faser.

Die Oberfläche der Extrusionsfolie kann beispielsweise mit Korona-Entladungen oberflächenbehandelt werden. Im Rahmen der Erfindung liegt es auch, dass mindestens eine Seite der Extrusionsfolie zusätzlich mit einem Polymer zur Verbesserung der Haftung von Farben und Klebstoffen beschichtet ist. Gemäß einer bevorzugten Ausführung der Erfindung besteht die nachträglich auf die durch Extrusion oder Coextrusionsfolie aufgebrachte Beschichtung aus einem Acrylpolymer. Die Beschichtung kann in einer dünnen Schicht aufgebracht werden. Die Schichtstärke der nachträglich aufgebrachten Schicht ist im Regelfall wesentlich kleiner als die Schichtdicke der aus HDPE bestehenden äußeren Zone, die erforderlich ist, um der Etikettenfolie eine ausreichende Biegesteifigkeit zu verleihen. Die Beschichtung der Extrusionsfolie weist im Allgemeinen einer Schichtstärke von nicht mehr als 0,1 µm bis 5 µm auf.

Im Folgenden wird die Erfindung anhand einer lediglich ein Ausführungsbeispiel darstellenden Zeichnung näher erläutert. Es zeigen jeweils in einer stark vergrößerten Darstellung schematisch:
- **Fig. 1**: einen Schnitt durch ein Etikettenfolien-Laminat,
- **Fig. 2**: den Schnitt durch eine Etikettenfolie des in Fig. 1 dargestellten Etikettenfolien-Laminats,
- **Fig. 3**: eine weitere erfindungsgemäße Ausgestaltung der Etikettenfolie ebenfalls im Schnitt.

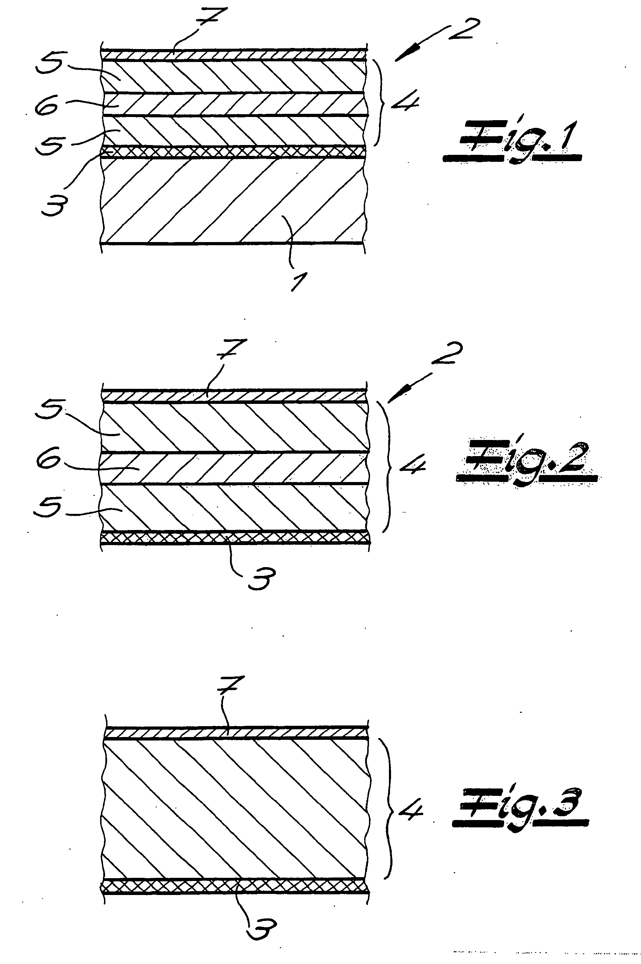

Das in Fig. 1 dargestellte Etikettenfolien-Laminat weist einen Träger 1 sowie eine von dem Träger 1 ablösbare, stanz- und bedruckbare Etikettenfolie 2 auf. Nach dem Ablösen von dem Träger 1 ist die Etikettenfolie 2 durch einen unterseitig anhaftenden Klebstoff 3 selbstklebend.

Die Etikettenfolie 2 basiert auf einer ein- oder mehrschichtigen Extrusionsfolie 4 aus Polyethylen, deren Foliendicke kleiner ist als 85 µm und vorzugsweise etwa 70 µm beträgt. Die Extrusionsfolie 4 besteht zumindest in äußeren Zonen 5 auf beiden Seiten aus einem Polyethylen hoher Dichte (HDPE) mit einer Dichte von mehr als 0,950 g/cm³. Im Ausführungsbeispiel der Fig. 2 ist die Extrusionsfolie 4 dreischichtig ausgebildet und weist zwischen den beiden äußeren Schichten 5 aus HDPE eine Kernschicht 6 aus einem Polyethylen niedriger Dichte mit einer Dichte von weniger als 0,945 g/cm³ auf. Die Kernschicht 6 besteht aus einem LDPE oder LLDPE-Polyethylen. Die äußeren Zonen 5 aus HDPE verleihen der Etikettenfolie 4 eine für die Weiterverarbeitung in Etikettiervorrichtungen ausreichende Biegesteifigkeit und weisen eine Schichtdicke von mindestens 15 µm auf. Vorzugsweise sind die äußeren Zonen 5 zwischen 18 µm und 25 µm dick. Im Ausführungsbeispiel steht die Kernschicht 6 mit den beiden äußeren Schichten 5, unmittelbar in Kontakt. Zwischen den Schichten 5, 6 können jedoch auch dünne Haftvermittlerschichten zur Verbesserung der Verbundfestigkeit vorgesehen sein.

Die Extrusionsfolie 4 kann auf mindestens einer Seite zusätzlich mit einem Polymer zur Verbesserung der Haftung von Farben und Klebstoffen beschichtet sein. Im Ausführungsbeispiel ist auf einer Seite der Folie eine Beschichtung 7 aus einem Acrylpolymer in einer Schichtstärke von weniger als 4 µm aufgetragen. Vor der Oberflächenbeschichtung erfährt die Extrusionsfolie 4 zweckmäßig eine Oberflächenbehandlung mit Korona-Entladung, damit die nachträglich aufgebrachte Beschichtung 7 besser haftet. Die nachträglich aufgebrachte Beschichtung 7 verbessert die Verankerung von Farben und Klebstoffen auf der Extrusionsfolie 4 und leistet aufgrund der geringen Schichtstärke, die wesentlich kleiner ist als die Dicke der äußeren Schichten 5, keinen wesentlichen Beitrag zur Biegesteifigkeit der Etikettenfolie.

Bei dem in Fig. 3 dargestellten Ausführungsbeispiel ist die Extrusionsfolie 4 als einschichtige Monofolie aus Polyethylen hoher Dichte (HDPE) mit einer Dichte von mehr als 0,950 g/cm³ ausgebildet. Die Foliendicke ist kleiner als 85 µm und beträgt vorzugsweise etwa 70 µm. Die Extrusionsfolie 4 kann ebenfalls auf mindestens einer Seite zusätzlich mit einem Polymer, z. B. einem Acrylpolymer, zur Verbesserung der Haftung von Farben und Klebstoffen beschichtet sein, wobei die Schichtstärke dieser nachträglich aufgebrachten Beschichtung 7 im Bereich zwischen 0,1 µm und maximal 5 µm liegt und sich auf die Biegesteifigkeit der Folien nur unwesentlich auswirkt.

Im Folgenden wird die Erfindung anhand einiger Beispiele erläutert:

### Beispiel 1:

Mit einer Breitschlitzdüse wurde eine 73 µm dicke Folie aus HDPE (Dichte 0,958 g/cm³, Schmelzindex 6 g/10 Min. bei 190°C und 2,16 kg) extrudiert. Nach der Abkühlung der Schmelze auf drei wassergekühlten Walzen wurde die Extrusionsfolie in einer Koronastation oberflächenbehandelt und aufgewickelt. Die Etikettenfolie wurde anschließend in einer Kaschieranlage auf einen Träger aufgebracht, bedruckt und ausgestanzt. Die Etiketten konnten auf Polyethylenflaschen mit hoher Geschwindigkeit appliziert werden.

### Beispiel 2:

Auf einer Blasfolienanlage wurde eine 70 µm dicke Etikettenfolie aus HDPE (Dichte 0,958 g/cm³, Schmelzindex 6 g/10 Min. bei 190° C und 2,16 kg) extrudiert. Nach einer Oberflächenbehandlung mit Korona-Entladungen wurde die Folie mit einem Acrylpolymer beschichtet und nach UV-Aushärtung aufgewickelt. Wie in Beispiel 1 konnte die Folie zum Etikettieren von Behältern eingesetzt werden.

### Beispiel 3:

Auf einer Blasfolienanlage wurde durch Coextrusion eine dreischichtige Etikettenfolie hergestellt. Die Gesamtdicke der Folie betrug 75 µm. Die beiden Außenschichten waren jeweils 20 µm dick und bestanden aus einem HDPE-Polyethylen (Dichte 0,960 g/cm³, Schmelzindex 8 g/10 Min. bei 190° C und 2,16 kg). Die Kernschicht war 35 µm dick und bestand aus einem LDPE-Polyethylen (Dichte 0,922 g/cm³, Schmelzindex 2 g/10 Min. bei 190° C und 2,16 kg). Auch diese Folie wurde entsprechend Beispiel 1 weiterverarbeitet.

### Beispiel 4:

Auf einer Blasfolienanlage wurde eine 70 µm dicke Folie aus HDPE-Polyethylen (Dichte 0,958 g/cm³, Schmelzindex 6 g/10 Min. bei 190° C und 2,16 kg) mit einer Zugabe von 6 Gew.-% Titandioxid als Weißpigment extrudiert. Nach einer Oberflächenbehandlung mit Korona-Entladungen wurde die Folie mit einem Acrylpolymer beschichtet und nach UV-Aushärtung aufgewickelt. Wie im Beispiel 1 wurde die Folie mit Erfolg zum Etikettieren von Behältern eingesetzt.

### Beispiel 5:

Auf einer Blasfolienanlage wurde eine 70 µm dicke Folie aus HDPE-Polyethylen (Dichte 0,958 g/cm³, Schmelzindex 6 g/10 Min. bei 190° C und 2,16 kg) extrudiert. Nach einer Oberflächenbehandlung mit Korona-Entladungen wurde die Etikettenfolie mit einem in Ethylacetat gelösten Acrylpolymer beschichtet und nach Trocknung aufgewickelt. Die Etikettenfolie konnte entsprechend dem Beispiel 1 weiterverarbeitet und erfolgreich zum Etikettieren von Behältern verwendet werden.

### Beispiel 6:

Auf einer Blasfolienanlage wurde eine 70 µm dicke Etikettenfolie aus HDPE-Polyethylen (Dichte 0,958 g/cm³, Schmelzindex 6 g/10 Min. bei 190° C und 2,16 kg) extrudiert. Nach einer Oberflächenbehandlung mit Korona-Entladungen wurde die Etikettenfolie mit einer wässrigen Dispersion eines Acrylpolymers beschichtet und nach Trocknung aufgewickelt. Die Etikettenfolie wurde entsprechend dem Beispiel 1 weiterverarbeitet und konnte mit Erfolg zum Etikettieren von Behältern eingesetzt werden.

## Patentansprüche

1. Etikettenfolien-Laminat mit einem Träger (1) und einer von dem Träger (1) ablösbaren, stanz- und bedruckbaren Etikettenfolie (2), wobei die Etikettenfolie (2) auf einer mehrschichtigen Extrusionsfolie (4) aus Polyethylen mit einer Foliendicke von weniger als 85 µm basiert, **dadurch gekennzeichnet, dass** die Extrusionsfolie (4) zwischen zwei äußeren Schichten (5) aus einem Polyethylen hoher Dichte (HDPE) mit einer Dichte von mehr als 0,950 g/cm³ eine Kernschicht (6) aus einem Polyethylen niedriger Dichte (LDPE oder LLDPE) mit einer Dichte von weniger als 0,945 g/cm³ aufweist, und wobei die äußeren Schichten (5) eine Schichtdicke von mindestens 15 µm aufweisen.

2. Etikettenfolien-Laminat nach Anspruch 1, **dadurch gekennzeichnet, dass** die äußeren Schichten eine Schichtdicke zwischen 18 µm und 25 µm aufweisen.

3. Etikettenfolien-Laminat nach Anspruch 1 oder 2, **dadurch gekennzeichnet, dass** die Oberfläche der Extrusionsfolie (4) mit Korona-Entladungen oberflächenbehandelt ist.

4. Etikettenfolien-Laminat nach einem der Ansprüche 1 bis 3, **dadurch gekennzeichnet, dass** mindestens eine Seite der Extrusionsfolie (4) zusätzlich mit einem Polymer zur Verbesserung der Haftung von Farben und Klebstoff beschichtet ist.

5. Etikettenfolien-Laminat nach Anspruch 4, **dadurch gekennzeichnet, dass** die Beschichtung (7) aus einem Acrylpolymer besteht.

6. Etikettenfolien-Laminat nach Anspruch 4 oder 5, **dadurch gekennzeichnet, dass** die Beschichtung (7) der Extrusionsfolie eine Schichtstärke von 0,1 bis 5 µm aufweist.

## Claims

1. A label film laminate comprising a backing (1) and a stampable and printable label film (2) which is detachable from the backing (1), wherein the label film (2) is based on a multilayer extruded film (4) of polyethylene having a film thickness of less than 85 µm, **characterised in that** the extruded film (4) comprises a core layer (6) of a low-density polyethylene (LDPE or LLDPE) having a density of less than 0.945 g/cm³ between two outer layers (5) of a high-density polyethylene (HDPE) having a density higher than 0.950 g/cm³, and wherein the outer layers (5) have a layer thickness of at least 15 µm.

2. The label film laminate according to claim 1, **characterised in that** the outer layers have a layer thickness between 18 µm and 25 µm.

3. The label film laminate according to claim 1 or 2, **characterised in that** the surface of the extruded film (4) is surface-treated with corona discharges.

4. The label film laminate according to any one of claims 1 to 3, **characterised in that** at least one side of the extruded film (4) is additionally coated with a polymer to improve the adhesion of inks and adhesive.

5. The label film laminate according to claim 4, **characterised in that** the coating (7) consists of an acrylic polymer.

6. The label film laminate according to claim 4 or 5, **characterised in that** the coating (7) of the extruded film has a layer thickness of 0.1 to 5 µm.

## Revendications

1. Stratifié de film pour étiquettes comprenant un support (1) et un film pour étiquettes (2) détachable, qui peut être découpé et imprimé, le film pour étiquettes (2) étant à base d'un film d'extrusion multicouche (4) en polyéthylène, l'épaisseur du film étant inférieure à 85 µm, **caractérisé en ce que** le film d'extrusion (4) présente, entre deux couches externes (5) constituées d'un polyéthylène haute densité (HDPE) dont la densité est supérieure à 0,950 g/cm³, une couche centrale (6) constituée d'un polyéthylène de densité inférieure (LLDPE ou LLDPE) dont la densité est inférieure à 0,945 g/cm³, les couches externes (5) présentant une épaisseur de couche minimale de 15 µm.

2. Stratifié de film pour étiquettes selon la revendication 1, **caractérisé en ce que** les couches externes présentent une épaisseur de couche entre 18 µm et 25 µm.

3. Stratifié de film pour étiquettes selon la revendication 1 ou 2, **caractérisé en ce que** la surface du film d'extrusion (4) est soumise à un traitement superficiel en couronne.

4. Stratifié de film pour étiquettes selon l'une quelconque des revendications 1 à 3, **caractérisé en ce qu'**au moins un côté du film d'extrusion (4) est en outre enduit d'un polymère pour améliorer l'adhérence des encres et des adhésifs.

5. Stratifié de film pour étiquettes selon la revendication 4, **caractérisé en ce que** l'enduction (7) est constituée d'un polymère acrylique.

6. Stratifié de film pour étiquettes selon la revendication 4 ou 5, **caractérisé en ce que** l'enduction (7) de la feuille d'extrusion présente une épaisseur de couche de 0,1 à 5 µm.
